# EUROPÄISCHE PATENTSCHRIFT

(11) **EP 2 234 712 B1**
(45) Veröffentlichungstag und Bekanntmachung des Hinweises auf die Patenterteilung: **13.07.2016**
(21) Anmeldenummer: 08861990.3
(22) Anmeldetag: 16.12.2008
(51) Int. Cl.: B01J 13/14

(54) **VERFAHREN ZUR HERSTELLUNG VON MIKROKAPSELN**
METHOD FOR PRODUCING MICROCAPSULES
PROCÉDÉ DE PRODUCTION DE MICROCAPSULES

(30) Priorität: 19.12.2007 EP 07123650
(43) Veröffentlichungstag der Anmeldung: 06.10.2010
(73) Patentinhaber: BASF SE, 67056 Ludwigshafen am Rhein (DE)
(72) Erfinder: JUNG, Marc Rudolf, 67551 Worms (DE)
(74) Vertreter: BASF IP Association
(86) Internationale Anmeldenummer: PCT/EP2008/067613
(87) Internationale Veröffentlichungsnummer: WO 2009/077525

(56) Entgegenhaltungen:
- WO-A1-2006/018130
- WO-A1-2006/053714
- WO-A1-2006/092439
- WO-A1-2008/116763
- WO-A2-2008/071649
- DE-A1-102007 055 813
- ANONYM: "Culminal- Methylcellulose, Methylhydroxyethylcellulose, Methylhydroxypropylcellulose: Physical and chemical properties." HERCULES - AQUALON BROCHURE, [Online] XP002524919 Gefunden im Internet: URL:http://www.herc.com/aqualon/product_da ta/brochures/22001e3.pdf>

## Beschreibung

Die vorliegende Erfindung betrifft ein Verfahren zur Herstellung von Mikrokapseln, die einen lipophilen Kapselkern und eine Kapselwand umfassen, die aufgebaut ist aus
30 bis 100 Gew.-% bezogen auf das Gesamtgewicht der Monomere, eines oder mehrerer Monomere (Monomere I) aus der Gruppe umfassend C₁-C₂₄-Alkylester der Acryl- und/oder Methacrylsäure, Acrylsäure, Methacrylsäure und Maleinsäure,
0 bis 70 Gew.-% bezogen auf das Gesamtgewicht der Monomere, eines oder mehrerer bi- oder polyfunktioneller Monomere (Monomere II), welches in Wasser nicht löslich oder schwer löslich ist und
0 bis 40 Gew.-% bezogen auf das Gesamtgewicht der Monomere, eines oder mehrerer sonstiger Monomere (Monomere III).

WO 2006/018130 A offenbart ein Verfahren zur Herstellung von Mikrokapseln, die einen lipophilen Kapselkern und eine Kapselwand umfassen, die aufgebaut ist aus 100 Gew.-% eines oder mehrerer C₁-C₂₄-Alkylester der Acryl- und/oder Methacrylsäure indem man eine Öl-in-Wasser-Emulsion enthaltend Monomer, lipophile Substanz und ein Schutzkolloid herstellt und anschließend eine radikalische Polymerisation durchführt. Das Schutzkolloid ist hier eine Mischung von anorganischen und organischen Schutzkolloiden. Das anorganische Schutzkolloid ist Kieselsäure. Das organische Schutzkolloid ist Methylhydroxypropylcellulose.

Mikrokapseln mit Wandmaterial auf Basis eines hochvernetzten Methacrylsäureesterpolymers sowie Verfahren zu ihrer Herstellung sind aus der EP-A-1 029 018,
DE-A-101 39 171, WO 2005/116559 sowie der älteren europäischen Anmeldung No. 06117092.4 bekannt. Sie alle betreffen mikroverkapselte Latentwärmespeichermaterialien in unterschiedlichsten Bauanwendungen. In den Verfahren zu ihrer Herstellung werden SiO₂-basierende Schutzkolloide in Kombination mit Methylcellulose eines mittleren Molekulargewichtes von ca. 120 000 g/mol oder mit einem Polymer auf Basis von Acrylamido-2-methylpropansulfonsäure eingesetzt. Es hat sich jedoch gezeigt, dass es beim Einsatz dieser Schutzkolloide unvorhersehbar immer wieder Reaktionsansätze gibt, die während der Polymerisation, insbesondere bei Temperaturerhöhung, verdicken und unbrauchbar werden.

Aufgabe der vorliegenden Erfindung war es somit, ein Verfahren zu finden, welches nicht die obigen Nachteile aufweist.

Demgemäß wurde ein Verfahren zur Herstellung von Mikrokapseln, die einen lipophilen Kapselkern und eine Kapselwand umfassen, die aufgebaut ist aus
30 bis 100 Gew.-% bezogen auf das Gesamtgewicht der Monomere, eines oder mehrerer Monomere (Monomere I) aus der Gruppe umfassend C₁-C₂₄-Alkylester der Acryl- und/oder Methacrylsäure, Acrylsäure, Methacrylsäure und Maleinsäure,
0 bis 70 Gew.-% bezogen auf das Gesamtgewicht der Monomere, eines oder mehrerer bi- oder polyfunktioneller Monomere (Monomere II), welches in Wasser nicht löslich oder schwer löslich ist und
0 bis 40 Gew.-% bezogen auf das Gesamtgewicht der Monomere, eines oder mehrerer sonstiger Monomere (Monomere III),
gefunden, bei dem man eine Öl-in-Wasser-Emulsion enthaltend Monomere und lipophile Substanz, ein auf SiO₂-basierendes Schutzkolloid und eine Methylhydroxy-(C₁-C₄)-alkylcellulose mit einem mittleren Molekulargewicht ≤ 50 000 g/mol herstellt und anschließend eine radikalische Polymerisation durchführt.

Die nach dem erfindungsgemäßen Verfahren erhaltenen Mikrokapseln umfassen einen Kapselkern aus lipophiler Substanz und eine Kapselwand aus Polymer. Der Kapselkern besteht überwiegend, zu mehr als 95 Gew.-%, aus lipophiler Substanz. Der Kapselkern kann dabei, abhängig von der Temperatur, sowohl fest als auch flüssig sein.

Das Schutzkolloid wird in der Regel mit in die Kapselwand eingebaut und ist somit ebenfalls Bestandteil der Kapselwand. In der Regel weist insbesondere die Oberfläche des Polymers das Schutzkolloid auf. So können bis zu 10 Gew.-% bezogen auf das Gesamtgewicht der Mikrokapseln Schutzkolloid sein.

Die mittlere Teilchengröße der Kapseln (Z-Mittel mittels Lichtstreuung) beträgt 0,5 bis 50 µm, bevorzugt 0,5 bis 30 µm. Das Gewichtsverhältnis von Kapselkern zu Kapselwand beträgt im allgemeinen von 50:50 bis 95:5. Bevorzugt wird ein Kern/Wand-Verhältnis von 70:30 bis 93:7.

Die Polymere der Kapselwand enthalten im Allgemeinen mindestens 30 Gew.-%, in bevorzugter Form mindestens 40 Gew.-%, in besonders bevorzugter Form mindestens 50 Gew.-%, insbesondere mindestens 60 Gew.-%, ganz besonders bevorzugt mindestens 70 Gew.-% sowie bis zu 100 Gew.-%, bevorzugt höchstens 90 Gew.-%, insbesondere höchstens 85 Gew.-% und ganz besonders bevorzugt höchstens 80 Gew.-% mindestens eines Monomeren aus der Gruppe umfassend C₁-C₂₄-Alkylester der Acryl- und/oder Methacrylsäure, Acrylsäure, Methacrylsäure und Maleinsäure (Monomere I), einpolymerisiert, bezogen auf das Gesamtgewicht der Monomere.

Weiterhin enthalten die Polymere der Kapselwand bevorzugt mindestens 10 Gew.-%, bevorzugt mindestens 15 Gew.-%, vorzugsweise mindestens 20 Gew.-% sowie im Allgemeinen höchstens 70 Gew.-%, vorzugsweise höchstens 60 Gew.-% und in besonders bevorzugter Form höchstens 50 Gew.-% eines oder mehrerer bi- oder polyfunktionelle Monomere, welche in Wasser nicht löslich oder schwer löslich sind (Monomere II) einpolymerisiert, bezogen auf das Gesamtgewicht der Monomere.

Daneben können die Polymere bis zu 40 Gew.-%, vorzugsweise bis zu 30 Gew.-%, insbesondere bis zu 20 Gew.-% sonstige Monomere III einpolymerisiert enthalten.

Vorzugsweise ist die Kapselwand nur aus Monomeren der Gruppen I und II aufgebaut.

Als Monomere I eignen sich C₁-C₂₄-Alkylester der Acryl- und/oder Methacrylsäure sowie die ungesättigten C₃- und C₄-Carbonsäuren wie Acrylsäure, Methacrylsäure sowie Maleinsäure. Geeignete Monomere I sind iso-Propyl-, iso-Butyl-, sec.-Butyl- und tert.-Butylacrylat und die entsprechenden Methacrylate, sowie besonders bevorzugte Methyl-, Ethyl-, n-Propyl- und n-Butylacrylat und die entsprechenden Methacrylate. Generell werden die Methacrylate und Methacrylsäure bevorzugt.

Nach einer bevorzugten Ausführungsform enthalten die Mikrokapselwände 25 Gew.-% bis 75 Gew.-% Maleinsäure, Methacrylsäure und/oder Acrylsäure insbesondere Methacrylsäure bezogen auf die Gesamtmenge der Monomere I, einpolymerisiert.

Geeignete Monomere I sind bi- oder polyfunktionelle Monomere, welche in Wasser nicht löslich oder schwer löslich sind, aber eine gute bis begrenzte Löslichkeit in der lipophilen Substanz haben. Unter Schwerlöslichkeit ist eine Löslichkeit kleiner 60 g/l bei 20°C zu verstehen. Unter bi- oder polyfunktionellen Monomeren versteht man Verbindungen, die wenigstens zwei nichtkonjugierte ethylenische Doppelbindungen haben. Vornehmlich kommen Divinyl- und Polyvinylmonomere in Beträcht. Sie bewirken eine Vernetzung der Kapselwand während der Polymerisation. Es können ein oder mehrere Divinylmonomere sowie ein oder mehrere Polyvinylmonomere sowie Divinylmonomere in Mischung mit Polyvinylmonomeren einpolymerisiert werden.

Gemäß einer bevorzugten Ausführungsform wird als Monomer II eine Mischung aus Divinyl- und Polyvinylmonomeren eingesetzt, wobei der Anteil der Polyvinylmonomeren 2 bis 90 Gew.-% bezogen auf die Summe aus Divinyl- und Polyvinylmonomeren beträgt. Bevorzugt beträgt der Anteil der Polyvinylmonomeren 5 bis 80 Gew.-%, vorzugsweise 10 bis 60 Gew.-%, bezogen auf die Summe aus Divinyl- und Polyvinylmonomeren.

Geeignete Divinylmonomere sind Divinylbenzol und Divinylcyclohexan. Bevorzugte Divinylmonomere sind die Diester von Diolen mit Acrylsäure oder Methacrylsäure, ferner die Diallyl- und Divinylether dieser Diole. Beispielhaft seien Ethandioldiacrylat, Ethylenglykoldimethacrylat, 1,3-Butylenglykoldimethacrylat, Methallylmethacrylamid, Allylacrylat und Allylmethacrylat genannt. Besonders bevorzugt sind Propandiol-, Butandiol-, Pentandiol- und Hexandioldiacrylat und die entsprechenden Methacrylate.

Bevorzugte Polyvinylmonomere sind die Polyester von Polyolen mit Acrylsäure und/oder Methacrylsäure, ferner die Polyallyl- und Polyvinylether dieser Polyole, Trivinylbenzol und Trivinylcyclohexan. Besonders bevorzugt werden Trimethylolpropantriacrylat und -methacrylat, Pentaerythrittriallylether, Pentaerythrittetraallylether, Pentaerythrittriacrylat und Pentaerythrittetraacrylat sowie ihre technischen Mischungen.

Bevorzugt werden die Kombinationen aus Divinyl- und Polyvinylmonomeren wie aus Butandioldiacrylat und Pentaeritrittetraacrylat, Hexandioldiacrylat und Pentaeritrittetraacrylat, Butandioldiacrylat und Trimethylolpropantriacrylat sowie Hexandioldiacrylat und Trimethylolpropantriacrylat.

Als Monomere III kommen sonstige Monomere, die von den Monomeren I und II verschieden sind, wie Vinylacetat, Vinylpropionat, Vinylpyridin und Styrol oder α-Methylstyrol in Betracht. Besonders bevorzugt werden Itaconsäure, Vinylphosphonsäure, Maleinsäureanhydrid, 2-Hydroxyethylacrylat und -methacrylat, Acrylamido-2-methylpropansulfonsäure, Methacrylnitril, Acrylnitril, Methacrylamid, N-Vinylpyrrolidon, N-Methylolacrylamid, N-Methylolmethacrylamid, Dimethylaminoethylmethacrylat und Diethylaminoethylmethacrylat.

Das erfindungsgemäße Herstellverfahren ist eine so genannte in-situ-Polymerisation. Das Prinzip der Mikrokapselbildung basiert darauf, dass man aus den Monomeren, einem Radikalstarter, dem Schutzkolloid und der einzukapselnden lipophilen Substanz eine stabile Öl-in-Wasser-Emulsion herstellt. Anschließend löst man die Polymerisation der Monomeren durch Erwärmung aus und steuert sie gegebenenfalls durch weitere Temperaturerhöhung, wobei die entstehenden Polymere die Kapselwand bilden, welche die lipophile Substanz umschließt. Dieses allgemeine Prinzip wird beispielsweise in der DE-A 101 39 171 beschrieben, auf deren Inhalt ausdrücklich Bezug genommen wird.

Gemäß der vorliegenden Erfindung wird eine Kombination eines auf SiO₂-basierendem Schutzkolloids und einer Methylhydroxy-(C₁-C₄)-alkylcellulose eingesetzt. Es hat sich dabei gezeigt, dass die Kombination mit einer niedermolekularen Methylhydroxy-(C₁-C₄)-alkylcellulose zu vorteilhaften Eigenschaften führt. Erfindungsgemäß wird eine Methylhydroxy-(C₁-C₄)-alkylcellulose mit einem mittleren Molekulargewicht (Gewichtsmittel) ≤ 50 000 g/mol, bevorzugt aus dem Bereich von 5 000 bis 50 000 g/mol, vorzugsweise von 10 000 bis 35 000 g/mol, insbesondere 20 000 bis 30 000 g/mol eingesetzt.

Unter Methylhydroxy-(C₁-C₄)-alkylcellulose sind Methylhydroxy-(C₁-C₄)-alkylcellulose unterschiedlichster Methylierungsgrade wie auch Alkoxylierungsgrade zu verstehen.

Methylhydroxy-(C₁-C₄)-alkylcellulosen werden in bekannter Weise durch zwei Reaktionsschritte hergestellt. In einem Schritt findet die Alkoxylierung von Cellulose mit Alkylenoxiden statt. Im zweiten Schritt findet die Methylierung vorhandener Hydroxylgruppen mit einem Methylhalogenid statt. Diese beiden Reaktionen finden in der Regel nacheinander statt, können jedoch auch gleichzeitig durchgeführt werden. Je nach Stöchiometrie der eingesetzten Alkylenoxide und Alkylierungsmittel zur Cellulose variiert der Grad der Substitution der Cellulose. Der durchschnittliche Substitutionsgrad (DS) gibt an, wie viele Hydroxyleinheiten an einer Dehydroglucose-Einheit durchschnittlich verethert wurden und kann von 0 bis 3 betragen. Der molare Substitutionsgrad (MS) gibt die mittlere Zahl von Alkoxy-Einheiten pro Dehydroglycoseeinheit an, und kann durch den Aufbau von Seitenketten während der Alkoxylierung auch größer als 3 werden.

Die bevorzugten Methylhydroxy-(C₁-C₄)-alkylcellulosen besitzen einen durchschnittliche Substitutionsgrad DS von 1,1 bis 2,5 und einen molaren Substitutionsgrad MS von 0,03 bis 0,9.

Geeignete Methylhydroxy-(C₁-C₄)-alkylcellulose sind beispielsweise Methylhydroxyethylcellulose oder Methylhydroxypropylcellulose. Besonders bevorzugt wird Methylhydroxypropylcellulose.

Derartige Methylhydroxy-(C₁-C₄)-alkylcellulosen sind beispielsweise unter den Handelsnamen Culminal^{®} der Firma Hercules/Aqualon erhältlich.

Geeignete auf SiO₂-basierende Schutzkolloide sind hochdisperse Kieselsäuren, die als feine, feste Teilchen in Wasser dispergiert werden können oder als so genannte kolloidale Dispersionen von Kieselsäure in Wasser eingesetzt werden. Solch kolloidale Dispersionen sind alkalische, wässrige Mischungen von Kieselsäure. Im alkalischen pH-Bereich sind die Partikel gequollen und in Wasser stabil. Für eine Verwendung dieser Dispersionen als Schutzkolloid ist es vorteilhaft, wenn der pH-Wert der Öl-in-Wasser Emulsion mit einer Säure auf pH 2 bis 7 eingestellt wird.

Bevorzugte kolloidale Dispersionen von Kieselsäure haben bei pH 9,3 eine spezifische Oberfläche im Bereich von 70 bis 90 m²/g.

Bevorzugt werden als auf SiO₂-basierende Schutzkolloide hochdisperse Kieselsäuren, deren mittleren Teilchengröße im Bereich von 40 bis 150 nm bei pH-Werten im Bereich von 8 - 11 liegt. Beispielhaft seien Levasil^{®} 50/50 (H.C.Starck), Köstrosol^{®} 3550 (CWK Bad Köstritz), und Bindzil^{®} 50/80 (Akzo Nobel Chemicals) erwähnt.

Die Abfolge der Dosierung des auf SiO₂-basierenden Schutzkolloids und der Methylhydroxy-(C₁-C₄)-alkylcellulose hat in der Regel keinen Einfluss auf das Verfahren und kann gemeinsam oder getrennt erfolgen.

Im allgemeinen werden das auf SiO₂-basierende Schutzkolloid und die Methylhydroxy-(C₁-C₄)-alkylcellulose in einer Gesamtmenge von 0,1 bis 15 Gew.-%, vorzugsweise von 0,5 bis 10 Gew.-% eingesetzt, bezogen auf die Wasserphase. Die Methylhydroxy-(C₁-C₄)-alkylcellulose wird dabei bevorzugt in einer Menge von 0,5 Gew.-% bis 1,5 Gew.-%, insbesondere von 0,6 Gew.-% bis 0,8 Gew.-% bezogen auf das auf SiO₂-basierende Schutzkolloid eingesetzt.

Ferner ist es möglich neben dem auf SiO₂-basierenden Schutzkolloid und der Methylhydroxy-(C₁-C₄)-alkylcellulose weitere organische oder anorganische Schutzkolloide in Mengen kleiner 15 Gew.-% bezogen auf das Gesamtgewicht der Mikrokapsel einzusetzen. Diese weiteren von den erfindungsgemäß eingesetzten Schutzkolloiden verschiedenen Schutzkolloide können sowohl organische wie auch anorganische Schutzkolloide sein, die ionisch oder neutral sein können.

Organische neutrale Schutzkolloide sind beispielsweise Hydroxyethylcellulose, Methylcellulose und Carboxymethylcellulose, Polyvinylpyrrolidon, Copolymere des Vinylpyrrolidons, Gelatine, Gummiarabicum, Xanthan, Kasein, Polyethylenglykole, Polyvinylalkohol und partiell hydrolysierte Polyvinylacetate.

Organische anionische Schutzkolloide sind Natriumalginat, Polymethacrylsäure und ihre Copolymerisate, Polyacrylsäure und ihre Copolymerisate, die Copolymerisate des Sulfoethylacrylats und -methacrylats, Sulfopropylacrylats und -methacrylats, des N-(Sulfoethyl)-maleinimids, der 2-Acrylamido-2-alkylsulfonsäuren, Styrolsulfonsäure sowie der Vinylsulfonsäure. Bevorzugte organisch anionische Schutzkolloide sind Naphthalinsulfonsäure und Naphthalinsulfonsäure-Formaldehyd-Kondensate sowie vor allem Polyacrylsäuren und Phenolsulfonsäure-Formaldehyd-Kondensate.

Ferner ist es möglich zur Costabilisierung Tenside, bevorzugt nichtionische Tenside zuzusetzen. Geeignete Tenside sind dem "Handbook of Industrial Surfactants" zu entnehmen, auf dessen Inhalt ausdrücklich Bezug genommen wird. Die Tenside können in einer Menge von 0,01 bis 10 Gew.-% bezogen auf die Wasserphase der Emulsion eingesetzt werden.

Als Radikalstarter für die radikalisch ablaufende Polymerisationsreaktion können die üblichen Peroxo- und Azoverbindungen, zweckmäßigerweise in Mengen von 0,2 bis 5 Gew.-%, bezogen auf das Gewicht der Monomere, eingesetzt werden.

Je nach Aggregatzustand des Radikalstarters und seinem Löslichkeitsverhalten kann er als solcher, bevorzugt jedoch als Lösung, Emulsion oder Suspension zugeführt werden, wodurch sich insbesondere kleine Stoffmengen Radikalstarter präziser dosieren lassen.

Als bevorzugte Radikalstarter sind tert.-Butylperoxoneodecanoat, tert.-Amylperoxypivalat, tert.-Amylperoxy-2-ethylhexanoat, 2,2'-Azobis-(2,4-dimethyl)valeronitril, 2,2'-Azobis-(2-methylbutyronitril), Dibenzoylperoxid, tert.-Butylper-2-ethylhexanoat, Di-tert.-butylperoxid, tert.-Butylhydroperoxid, 2,5-Dimethyl-2,5-di-(tert.-butylperoxy)hexan und Cumolhydroperoxid zu nennen.

Besonders bevorzugte Radikalstarter sind Di-(3,5,5-trimethylhexanoyl)-peroxid, 4,4'-Azobisisobutyronitril, tert.-Butylperpivalat, Dilauroylperoxid und Dimethyl-2,2-azobisisobutyrat. Diese weisen eine Halbwertzeit von 10 Stunden in einem Temperaturbereich von 30 bis 100°C auf.

Weiterhin ist es möglich zur Polymerisation dem Fachmann bekannte Regler in üblichen Mengen zuzusetzen wie tert.-Dodecylmercaptan oder Ethylhexylthioglycolat.

Vorzugsweise wählt man die Dispergierbedingungen zur Herstellung der stabilen Öl-in-Wasser Emulsion in an sich bekannter Weise so, dass die Öltröpfchen die Größe der gewünschten Mikrokapseln haben.

In der Regel ist das auf SiO₂-basierendem Schutzkolloid alkalistabilisiert. Zur Herstellung der Öl-in-Wasser-Emulsion ist es vorteilhaft, den pH-Wert der Emulsion abzusenken, üblicherweise auf einen pH-Wert im Bereich von 2 bis 7. Nach einer bevorzugten Ausführungsform stellt man den pH-Wert der Öl-in-Wasser-Emulsion auf einen Wert im Bereich von 1,5 - 4 vorzugsweise von 2 - 3, insbesondere annähernd pH 2,5. Dies kann durch Zusetzen von Säuren wie Salzsäure, Schwefelsäure, Salpetersäure, Ameisensäure oder Phosphorsäure geschehen.

Bevorzugt werden die Mikrokapseln gebildet, indem man die Öl-in-Wasser-Emulsion durch Erwärmen radikalisch polymerisiert. In der Regel führt man die Polymerisation bei Temperaturen im Bereich von 20 bis 120°C und vorzugsweise von 40 bis 95°C durch. Abhängig von der gewünschten lipophilen Substanz ist die Öl-in-Wasser-Emulsion bei einer Temperatur zu bilden, bei der das Kernmaterial flüssig/ölig ist. Entsprechend sollte die Polymerisation 2 bis 50 K oberhalb dieser Temperatur durchgeführt werden, so dass man gegebenenfalls einen Radikalstarter wählt, dessen Zerfallstemperatur oberhalb des Schmelzpunkts der lipophilen Substanz liegt.

Eine gängige Verfahrensvariante für lipophile Substanzen mit einem Schmelzpunkt bis etwa 60°C ist eine Reaktiönstemperatur beginnend bei 60°C, die im Verlauf der Reaktion auf 85°C erhöht wird. Vorteilhafte Radikalstarter haben eine 10-Stunden Halbwertszeit im Bereich von 45 bis 65°C wie tert.-Butylperpivalat.

Nach einer weiteren Verfahrensvariante für lipophile Substanzen mit einem Schmelzpunkt oberhalb 60°C wählt man ein Temperaturprogramm, welches bei entsprechend höheren Reaktionstemperaturen startet. Für Anfangstemperaturen um die 85°C werden Radikalstarter mit einer 10-Stunden Halbwertszeit im Bereich von 70 bis 90°C bevorzugt wie tert.-Butylper-2-ethylhexanoat.

Zweckmäßigerweise wird die Polymerisation bei Normaldruck vorgenommen, jedoch kann man auch bei vermindertem oder leicht erhöhtem Druck arbeiten z. B. bei einer Polymerisationstemperatur oberhalb 100°C, also etwa im Bereich von 0,5 bis 5 bar.

Die Reaktionszeiten der Polymerisation betragen normalerweise 1 bis 10 Stunden, meistens 2 bis 5 Stunden.

Im Anschluss an die eigentliche Polymerisationsreaktion bei einem Umsatz von 90 bis 99 Gew.-% ist es in der Regel vorteilhaft, die wässrigen Mikrokapseldispersionen weitgehend frei von Geruchsträgern, wie Restmonomere und anderen flüchtigen organischen Bestandteilen zu gestalten. Dies kann in an sich bekannter Weise physikalisch durch destillative Entfernung (insbesondere über Wasserdampfdestillation) oder durch Abstreifen mit einem inerten Gas erreicht werden. Ferner kann es chemisch geschehen, wie in der WO 99/24525 beschrieben, vorteilhaft durch redoxinitiierte Polymerisation, wie in der DE-A 44 35 423, DE-A 44 19 518 und DE-A 44 35 422 beschrieben.

Man kann auf diese Weise Mikrokapseln mit einer mittleren Teilchengröße im Bereich von 0,5 bis 100 µm herstellen, wobei die Teilchengröße in an sich bekannter Weise über die Scherkraft, die Rührgeschwindigkeit, und seine Konzentration eingestellt werden kann. Bevorzugt werden Mikrokapseln mit einer mittleren Teilchengröße im Bereich von 0,5 bis 50 um, bevorzugt 0,5 bis 30 µm, insbesondere 3 bis 7 µm (Z-Mittel mittels Lichtstreuung).

Es ist möglich die Mikrokapseln mit Polyelektrolyt zu behandeln, was gegebenenfalls die Dichtigkeit der Kapseln noch verbessern kann. Verfahren zu ihrer Herstellung sowie geeignete Polyelektrolyte sind in der älteren europäischen Anmeldung Nr. 06122418.4 beschrieben, auf die ausdrücklich verwiesen wird.

Die erfindungsgemäßen Mikrokapseln sind je nach lipophiler Substanz für Durchschreibepapier, in der Kosmetik, zur Verkapselung von Duftstoffen, Aromastoffen, Klebstoffen, Bioziden oder im Pflanzenschutz geeignet. Besonders eignet sich das erfindungsgemäße Verfahren zur Verkapselung von Latentwärmespeichermaterialien.

Latentwärmespeichermaterialien sind definitionsgemäß Substanzen, die in dem Temperaturbereich, in welchem eine Wärmeübertragung vorgenommen werden soll, einen Phasenübergang aufweisen, daher in der Literatur oftmals auch als PCM (Phase Change Material) bezeichnet. Vorzugsweise handelt es sich um eine organische lipophile Substanz, die ihren fest/flüssig Phasenübergang im Temperaturbereich von -20 bis 120°C aufweist.

Beispielhaft seien genannt:
- aliphatische Kohlenwasserstoffverbindungen wie gesättigte oder ungesättigte C₁₀-C₄₀-Kohlenwasserstoffe, die verzweigt oder bevorzugt linear sind, z.B. wie n-Tetradecan, n-Pentadecan, n-Hexadecan, n-Heptadecan, n-Octadecan, n-Nonadecan, n-Eicosan, n-Heneicosan, n-Docosan, n-Tricosan, n-Tetracosan, n-Pentacosan, n-Hexacosan, n-Heptacosan, n-Octacbsari sowie cyclische Kohlenwasserstoffe, z.B. Cyclöhexan, Cyclooctan, Cyclodecan;
- aromatische Kohlenwasserstoffverbindungen wie Benzol, Naphthalin, Biphenyl, o- oder m-Terphenyl, C₁-C₄₀-alkylsubstituierte aromatische Kohlenwasserstoffe wie Dodecylbenzol, Tetradecylbenzol, Hexadecylbenzol, Hexylnaphthalin oder Decylnaphthalin;
- gesättigte oder ungesättigte C₆-C₃₀-Fettsäuren wie Laurin-, Stearin-, Öl- oder Behensäure, bevorzugt eutektische Gemische aus Decansäure mit z.B. Myristin-, Palmitin- oder Laurinsäure;
- Fettalkohole wie Lauryl-, Stearyl-, Oleyl-, Myristyl-, Cetylalkohol, Gemische wie Kokosfettalkohol sowie die so genannten Oxoalkohole, die man durch Hydroformylierung von α-Olefinen und weiteren Umsetzungen erhält;
- C₆-C₃₀-Fettamine, wie Decylamin, Dodecylamin, Tetradecylamin oder Hexadecylamin;
- Ester wie C₁-C₁₀-Alkylester von Fettsäuren wie Propylpalmitat, Methylstearat oder Methylpalmitat sowie bevorzugt ihre eutektischen Gemische oder Methylcinnamat;
- natürliche und synthetische Wachse wie Montansäurewachse, Montanesterwachse, Carnaubawachs, Polyethylenwachs, oxidierte Wachse, Polyvinyletherwachs, Ethylenvinylacetatwachs oder Hartwachse nach Fischer-Tropsch-Verfahren;
- halogenierte Kohlenwasserstoffe wie Chlorparaffin, Bromoctadecan, Brompentadecan, Bromnonadecan, Bromeicosan, Bromdocosan.

Weiterhin sind Mischungen dieser Substanzen geeignet, solange es nicht zu einer Schmelzpunkterniedrigung außerhalb des gewünschten Bereichs kommt, oder die Schmelzwärme der Mischung für eine sinnvolle Anwendung zu gering wird.

Vorteilhaft ist beispielsweise die Verwendung von reinen n-Alkanen, n-Alkanen mit einer Reinheit von größer als 80% oder von Alkangemischen, wie sie als technisches Destillat anfallen und als solche handelsüblich sind.

Weiterhin kann es vorteilhaft sein, den lipophilen Substanzen in ihnen lösliche Verbindungen zuzugeben, um so die zum Teil bei den unpolaren Substanzen auftretende Kristallisationsverzögerung zu verhindern. Vorteilhaft verwendet man, wie in der US-A 5 456 852 beschrieben, Verbindungen mit einem 20 bis 120 K höheren Schmelzpunkt als die eigentliche Kernsubstanz. Geeignete Verbindungen sind die oben als lipophile Substanzen erwähnten Fettsäuren, Fettalkohole, Fettamide sowie aliphatischen Kohlenwasserstoffverbindungen. Sie werden in Mengen von 0,1 bis 10 Gew.-% bezogen auf den Kapselkern zugesetzt.

Die Latentwärmespeichermaterialien werden - je nach Temperaturbereich, in dem die Wärmespeicher gewünscht sind - ausgewählt. Beispielsweise verwendet man für Wärmespeicher in Baustoffen in gemäßigtem Klima bevorzugt Latentwärmespeichermaterialien, deren fest/flüssig Phasenübergang im Temperaturbereich von 0 bis 60°C liegt. So wählt man in der Regel für Innenraumanwendungen Einzelstoffe oder Mischungen mit Umwandlungstemperaturen von 15 bis 30°C. Für Anwendungen im Textilsektor sind vor allem Umwandlungstemperaturen von 0 bis 40 °C vorteilhaft.

Bevorzugte Latentwärmespeichermaterialien sind aliphatische Kohlenwasserstoffe besonders bevorzugt die oben beispielhaft aufgezählten. Insbesondere werden aliphatische Kohlenwasserstoffe mit 14 bis 20 Kohlenstoffatomen sowie deren Gemische bevorzugt.

Die nach dem erfindungsgemäßen Verfahren erhaltenen Mikrokapseldispersionen lassen sich direkt als wässrige Dispersion verwenden. So weisen sie eine gute Lager- und Temperaturstabilität auf. Die Mikrokapseldispersion können vielfältig eingesetzt werden, beispielsweise als Dispersionen in der Bauchemie oder zum Beschichten von Textilien, Fasern, Papier, Karton, Schaumstoff oder als Wärmeträgerflüssigkeit.

Nach einer bevorzugten Ausführungsform werden die Mikrokapseln in einem sich anschließenden Verfahrensschritt durch Sprühtrocknung der wässrigen Mikrokapseldispersion isoliert.

Demgemäß umfasst die vorliegende Erfindung auch ein Verfahren zur Herstellung von Mikrokapseln, die einen lipophilen Kapselkern und eine Kapselwand umfassen, die aufgebaut ist aus
- 30 bis 100 Gew.-%: bezogen auf das Gesamtgewicht der Monomere, eines oder mehrerer Monomere (Monomere I) aus der Gruppe umfassend C₁-C₂₄-Alkylester der Acryl- und/oder Methacrylsäure, Acrylsäure, Methacrylsäure und Maleinsäure,
- 0 bis 70 Gew.-%: bezogen auf das Gesamtgewicht der Monomere, eines oder mehrerer bi- oder polyfunktioneller Monomere (Monomere II), welches in Wasser nicht löslich oder schwer löslich ist und
- 0 bis 40 Gew.-%: bezogen auf das Gesamtgewicht der Monomere, eines oder mehrerer sonstiger Monomere (Monomere III),
indem man
a) eine Öl-in-Wasser-Emulsion enthaltend Monomere und lipophile Substanz, ein auf SiO₂-basierendes Schutzkolloid und eine Methylhydroxy-(C₁-C₄)-alkylcellulose mit einem mittleren Molekulargewicht ≤ 50 000 g/mol herstellt,
b) anschließend eine radikalische Polymerisation durchführt und
c) die aus b) erhaltene Mikrokapseldispersion sprühtrocknet.

Bevorzugt erfolgt das Versprühen der wässrigen Polymerisatdispersion im Warmluftstrom mittels Einstoffdüsen. Die Tröpfchengröße bei Austritt wird so gewählt, dass ein Mikrokapselpulver entsteht, beim dem die Pulverteilchen eine mittlere Teilchengröße im Bereich von 100 - 400 µm und 80 Gew.-% der Teilchen eine Größe ≥ 90 µm haben. Abhängig von der Viskosität der Mikrokapseldispersion wählt der Fachmann den Durchmesser der Düse und den Vordruck des Stoffstroms. Je höher der Vordruck, desto kleinere Tröpfchen werden erzeugt. Üblicherweise wird die Mikrokapseldispersion im Bereich von 2-200 bar eingespeist. Vorteilhaft wird eine Einstoffdüse mit Drallerzeuger verwendet. Über die Auswahl des Drallerzeugers können Tropfengröße und Sprühwinkel zusätzlich beeinflusst werden. Beispielsweise kann man Einstoffdüsen der Firma Delavan verwenden, die einen typischen Aufbau bestehend aus Drallkammer, welche den Sprühwinkel beeinflusst, und Lochplatte haben, welche den Durchsatz beeinflusst.

Im allgemeinen wird so vorgegangen, dass die Eingangstemperatur des Warmluftstroms im Bereich von 100 bis 200°C, vorzugsweise 120 bis 180°C, und die Ausgangstemperatur des Warmluftstroms im Bereich von 30 bis 110°C, vorzugsweise 50 bis 90°C liegt. Die Temperaturdifferenz zwischen Eingangs- und Ausgangstemperatur beträgt vorzugsweise mindestens 50 °C, bevorzugt mindestens 60 °C und besonders bevorzugt mindestens 70 °C. Die Abscheidung der Feinteile aus dem Gasstrom erfolgt normalerweise unter Verwendung von Zyklonen oder Filterabscheidern. Dabei werden die Feinteile bevorzugt redispergiert und in den Stoffstrom zurückgeführt. Die versprühte wässrige Polymerisatdispersion und der Warmluftstrom werden vorzugsweise parallel geführt.

Nach einer Verfahrensvariante ist es möglich, nachgeschaltet an den Trockner, ein Wirbelbett zu schalten, um gegebenenfalls Restfeuchte auszutragen. Verfahren, bei denen an die Sprühtrocknung eine Wirbelbetttrocknung angeschlossen ist, werden bevorzugt, da sie zu einem Mikrokapselpulver mit einem geringeren Feinanteil führen.

Als Sprühturm lassen sich beispielsweise Trockner der Firmen Anhydro, Miro oder Nubilosa verwenden, die Turmhöhen von 12-30 Metern und Breiten von 3 bis 8 Metern haben. Der Durchsatz an Trockenluft liegt für solche Sprühtürme typischer Weise im Bereich von 20-30 t/h. Der Durchsatz an Mikrokapseldispersion liegt dann in der Regel bei 1 bis 1,5 t/h.

Ferner können die Pulvereigenschaften auch durch die Temperatur der Nachbehandlung, mit der das Pulver aus dem Sprühturm ausgetragen wird beeinflusst werden. Typischerweise stellt man Temperaturbereiche von 20-30 °C, selten höher als 40 °C ein.

Gegebenenfalls setzt man zur Sprühtrocknung Sprühhilfsmittel zu, um die Sprühtrocknung zu erleichtern, oder bestimmte Pulvereigenschaften einzustellen, z.B. Staubarmut, Rieselfähigkeit oder verbesserte Redispergierbarkeit. Dem Fachmann sind eine Vielzahl von Sprühhilfsmitteln geläufig. Beispiele hierfür finden sich in DE-A 196 29 525, DE-A 196 29 526, DE-A 22 14 410, DE-A 24 45 813, EP-A 407 889 oder EP-A 784 449. Vorteilhafte Sprühhilfsmittel sind beispielsweise wasserlösliche Polymere vom Typ Polyvinylalkohol oder teilhydrolysierte Polyvinylacetate, Cellulosederivate wie Hydroxyethylcellulose, Carboxymethylcellulose, Methylcellulose, Methylhydroxyethylcellulose und Methylhydroxypropylcellulose, Polyvinylpyrrolidon, Copolymere des Vinylpyrrolidons, Gelatine, bevorzugt Polyvinylalkohol und partiell hydrolysierte Polyvinylacetate. Bevorzugt wählt man als Sprühhilfsmittel eine Methylhydroxy-(C₁-C₄)-alkylcellulose. Besonders bevorzugt wird eine Methylhydroxy-(C₁-C₄)-alkylcellulose mit einem mittleren Molekulargewicht ≤ 50 000 g/mol und insbesondere Methylhydroxypropylcellulose als Sprühhilfsmittel eingesetzt.

Das erfindungsgemäß erhaltene Mikrokapselpulver ist gut redispergierbar auch über die große Breite seiner verschiedensten Anwendungen in Bindemitteldispersionen und mit unterschiedlichsten Füllstoffen. Darüber hinaus neigt das erfindungsgemäße Mikrokapselpulver auch nach längerer Lagerung des Pulvers nicht zum Verblocken bei normaler Lagerung. Das so erhaltene Mikrokapselpulver lässt es sich sowohl vorteilhaft in Textilien wie Textilgeweben, Textilbeschichtungen, Nonwovens (z.B. Vliesstoffe) usw. einarbeiten wie auch in Bindebaustoffe mit mineralischen, silikatischen oder polymeren Bindemitteln.

Das erfindungsgemäße Verfahren zeigt keinerlei Verdickungsneigung und lässt sich gut reproduzieren. Selbst bei Einsatz von überalterten SiO₂-Pickering Systemen, die sich bisher nicht mehr verarbeiten ließen, wird bei den Ansätzen allenfalls eine minimale Verdickung beobachtet, die jedoch keinen Einfluss auf die Reaktionsführung hat. Die nachfolgenden Beispiele sollen die Erfindung näher erläutern. Bei den Prozentangaben in den Beispielen handelt es sich um Gewichtsprozent sofern nicht anders angegeben.

Die Teilchengröße des Mikrokapselpulvers wurde mit einem Malvern Particle Sizer Typ 3600E gemäß einer Standardmessmethode bestimmt, die in der Literatur dokumentiert ist.

### Beispiel 1:

### Wasserphase:

- 680 g: Wasser
- 110 g: eines 50 gew.-%igen Silica-Sols (spez. Oberfläche ca. 80 m² / g, pH ca. 9,3)
- 8 g: einer 5 gew.-%igen wässrigen Lösung von Methylhydroxypropylcellulose mit einem mittl. Molekulargewicht von 26000 g/mol
- 2,1 g: einer 2,5 gew.-%igen wässrigen Natriumnitrit-Lösung
- 3,8 g: einer 20 %-igen Salpetersäure-Lösung in Wasser
- Ölphase 431 g: eines Gemischs im wesentlichen linearer Paraffine mit einem Schmelzpunkt von 26 °C

- 9 g: eines technischen Paraffins mit einem Schmelzpunkt von 65 °C
- 82.5 g: Methylmethacrylat
- 27,5 g: Butandiolacrylat
- 0,76 g: Ethylhexylthioglycolat
- Zugabe 1 0,92 g: einer 75%igen Lösung von t-Butylperpivalat in aliphat. Kohlenwasserstoffen
- Zulauf 1: 7,14 g: einer 10 gew.-%igen wässrigen t-Butylhydroperoxidlösung
- Zulauf 2: 28,38 g: einer 1%igen wässrigen Ascorbinsäure-Lösung

Die Wasserphase wurde bei 40 °C vorgelegt, in diese wurde die aufgeschmolzene und homogen gemischte Ölphase gegeben und für 40 Minuten mit einem schnelllaufenden Dissolverrührer (Scheiben-Durchmesser 5 cm) bei 3500 Upm dispergiert. Zugabe 1 wurde zugegeben. Die Emulsion wurde unter Rühren mit einem Ankerrüher in 60 Minuten auf 67 °C gehalten, innerhalb von weiteren 60 Minuten auf 85 °C aufgeheizt und für eine Stunde bei 85 °C gehalten. Zu der entstandenen Mikrokapseldispersion wurde unter Rühren Zulauf 1 gegeben. Der Zulauf 2 wurde unter Rühren bei über 90 Minuten dosiert zugegeben, während auf Raumtemperatur abgekühlt wurde. Dann wurde mit Natronlauge neutralisiert. Es wurde eine Mikrokapseldispersion mit einer mittleren Teilchengröße von 6,5 µm und einem Feststoffgehalt von 43,7 % erhalten.

Durch Zugabe von Verdickern nach Abkühlen auf Raumtemperatur kann in an sich bekannter Weise ein Aufrahmen verhindert werden.

### Beispiel 2

Die Reaktionsbedingungen des Beispiels 1 wurden beibehalten, mit dem Unterschied, dass ein künstlich gealtertes Silica-Sol eingesetzt wurde.

Die Alterung des Silica-Sols wurde herbeigeführt, indem das Silica-Sol 10 Wochen bei 50 °C gelagert wurde. Trotz des gealterten Silica-Sols verdickte der Reaktionsansatz nur unwesentlich. Das gealterte Silica-Sol ließ sich mit dem erfindungsgemäß gewählten Schutzkolloid noch verarbeiten. Es wurde eine Mikrokapseldispersion mit einer mittleren Teilchengröße von 6,5 µm erhalten.

Unter realen Bedingungen kann innerhalb weniger Tage eine Charge, die mit anderen als den erfindungsgemäßen organischen Schutzkolloiden nur geringe Verdickung zeigt, plötzlich unverarbeitbar werden. Durch Verwendung der erfindungsgemäßen Schutzkolloide kann mit diesem Material trotzdem weitergearbeitet werden.

### Beispiel 3 (Vergleichsbeispiel, nicht erfindungsgemäß)

Es wurde analog Beispiel 1 gearbeitet mit dem Unterschied, dass die Methylhydroxypropylcellulose weggelassen wurde. Beim Einsetzen der Polymerisation bei ca. 70 °C wurde eine vollständige Koagulation beobachtet, so dass ein relativer Drehmomentanstieg bei 85°C nicht messbar war und der Ansatz verworfen werden musste.

### Beispiel 4 (Vergleichsbeispiel, nicht erfindungsgemäß)

Es wurden analog Beispiel 1 gearbeitet, mit dem Unterschied, dass das gealterte Silica-Sol des Beispiels 2 verwendet wurde. Ein weiterer Unterschied war, dass anstelle der erfindungsgemäßen Methylhydroxypropylcellulose 2g einer 20%igen Lösung eines Copolymers, aufgebaut aus 59% AMPS, 20% Acrylsäure, 20% Methylacrylat und 1% Styrol eingesetzt wurde. Es war erneut bei 85°C eine vollständige Koagulation zu beobachten.

### Beispiele 5 bis 10

Es wurden dieselben Einsatzstoffe und Bedingungen wie in Beispiel 1 gewählt, mit dem Unterschied, dass das gealterte Silica-Sol des Beispiels 2 verwendet wurde. Ein weiterer Unterschied war, dass anstelle der erfindungsgemäßen Methylhydroxypropylcellulose x gew.-%ige wässrige Lösungen von Methylhydroxypropylcellulose (MHPC) bzw. Methylhydroxyethylcellulose (MHEC) mit erfindungsgemäßen bzw. höheren Molekulargewichten eingesetzt wurde. Ferner varierte die relative Menge an Methylhydroxy-(C₁-C₄)-alkylcellulose/Silica Sol. Die jeweilige Methylhydroxy-(C₁-C₄)-alkylcellulose, ihr mittleres Molekulargewicht und ihre relative Menge zum Silica-Sol (fest/fest) sind der nachfolgenden Tabelle zu entnehmen. Ferner ist der Tabelle das relative Drehmoment (Mᵣₑₗ) bei 85 °C im Vergleich zum Drehmoment zu Beginn des Heizprogramms (Zeitpunkt direkt vor der Zugabe des Initiators, 40 °C) zu entnehmen. Ein relativer Drehmomentanstieg von 2 bedeutet eine Verdoppelung des Drehmomentes. Es zeigte sich, dass ein relativer Drehmomentanstieg von 2 noch tolerabel war. Ansätze, die noch höhere Anstiege zeigten, tendierten zur Koagulat-Bildung bis hin zur völligen Unbrauchbarkeit.

**Tabelle**

| Bsp. | Methylhydroxy-(C₁-C₄)-alkylcellulose eingesetzt als x gew.-%ige wässrige Lösung | M_{w} | rel. Menge Methylhydroxy-(C₁-C₄)-alkylcellulose / Silica Sol (fest/fest) | Mᵣₑₗ |
|---|---|---|---|---|
| 5 (n.e.) | MHEC 1 gew.%-ig | 120 000 | 0,0036 | * |
| 6 (n.e.) | MHEC 1 gew.%-ig | 120 000 | 0,0073 | * |
| 7 | MHPC 5 gew.%-ig | 26 000 | 0,0036 | 2 |
| 8 | MHPC 5 gew.%-ig | 26 000 | 0,0109 | 1,5 |
| 9 | MHPC 7,5 gew.%-ig | 17 000 | 0,0073 | 1,75 |
| 10 (n.e.) | MHPC 2 gew.%-ig | 75 000 | 0,0073 | * |

| | | | | |
|---|---|---|---|---|
| *Das relative Drehmoment Mᵣₑₗ war in den Beispielen 5, 6 und 10 nicht bestimmbar, da die Reaktionsmischung vollständig koaguliert war. | | | | |

Die Beispiele 5, 6 und 10 sind als Vergleichsbeispiele nicht erfindungsgemäß (n.e.).

## Patentansprüche

1. Verfahren zur Herstellung von Mikrokapseln, die einen lipophilen Kapselkern und eine Kapselwand umfassen, die aufgebaut ist aus
30 bis 100 Gew.-% bezogen auf das Gesamtgewicht der Monomere, eines oder mehrerer Monomere (Monomere I) aus der Gruppe umfassend C₁-C₂₄-Alkylester der Acryl- und/oder Methacrylsäure, Acrylsäure, Methacrylsäure und Maleinsäure,
0 bis 70 Gew.-% bezogen auf das Gesamtgewicht der Monomere, eines oder mehrerer bi- oder polyfunktioneller Monomere (Monomere II), welches in Wasser nicht löslich oder schwer löslich ist und
0 bis 40 Gew.-% bezogen auf das Gesamtgewicht der Monomere, eines oder mehrerer sonstiger Monomere (Monomere III),
indem man eine Öl-in-Wasser-Emulsion enthaltend Monomere und lipophile Substanz, ein auf SiO₂-basierendes Schutzkolloid und eine Methylhydroxy-(C₁-C₄)-alkylcellulose mit einem mittleren Molekulargewicht ≤ 50 000 g/mol herstellt und anschließend eine radikalische Polymerisation durchführt.

2. Verfahren nach Anspruch 1, **dadurch gekennzeichnet, dass** man ein auf SiO₂-basierendes Schutzkolloid und eine Methylhydroxypropylcellulose wählt.

3. Verfahren nach Anspruch 1, **dadurch gekennzeichnet, dass** man ein auf SiO₂-basierendes Schutzkolloid und eine Methylhydroxy-(C₁-C₄)-alkylcellulose mit einem durchschnittlichen Substitutionsgrad DS von 1,1 bis 2,5 und einem molaren Substitutionsgrad MS von 0,03 bis 0,9 wählt.

4. Verfahren nach einem der Ansprüche 1 bis 3, **dadurch gekennzeichnet, dass** man hochdisperse Kieselsäuren mit mittleren Teilchengrößen im Bereich von 40 bis 150 nm wählt.

5. Verfahren nach einem der Ansprüche 1, 3 oder 4, **dadurch gekennzeichnet, dass** man die Methylhydroxy-(C₁-C₄)-alkylcellulose in einer Menge von 0,5 Gew.-% bis 1,5 Gew.-% bezogen auf das auf SiO₂-basierende Schutzkolloid einsetzt.

6. Verfahren nach einem der Ansprüche 1 bis 5, **dadurch gekennzeichnet, dass** man die Öl-in-Wasser-Emulsion durch Erwärmen radikalisch polymerisiert.

7. Verfahren nach einem der Ansprüche 1 bis 6, **dadurch gekennzeichnet, dass** man die Öl-in-Wasser-Emulsion auf einen pH-Wert im Bereich von 2 bis 7 einstellt.

8. Verfahren nach Anspruch 1, **dadurch gekennzeichnet, dass** man die durch radikalische Polymerisation erhaltene Mikrokapseldispersion sprühtrocknet.

9. Verfahren nach Anspruch 8, **dadurch gekennzeichnet, dass** man als Sprühhilfsmittel eine Methylhydroxy-(C₁-C₄)-alkylcellulose wählt.

10. Verfahren nach Anspruch 8 oder 9, **dadurch gekennzeichnet, dass** man als Sprühhilfsmittel eine Methylhydroxy-(C₁-C₄)-alkylcellulose mit einem mittleren Molekulargewicht ≤ 50 000 g/mol wählt.

## Claims

1. A process for preparing microcapsules comprising a lipophilic capsule core and a capsule wall synthesized from
30% to 100% by weight, based on the total weight of the monomers, of one or more monomers (monomers I) from the group comprising C₁-C₂₄ alkyl esters of acrylic and/or methacrylic acid, acrylic acid, methacrylic acid, and maleic acid,
0% to 70% by weight, based on the total weight of the monomers, of one or more difunctional or polyfunctional monomers (monomers II) which are sparingly soluble or insoluble in water, and
0% to 40% by weight, based on the total weight of the monomers, of one or more other monomers (monomers III),
by preparing an oil-in-water emulsion comprising monomers and lipophilic substance, an SiO₂-based protective colloid, and a methylhydroxy-(C₁-C₄)-alkylcellulose having an average molecular weight ≤ 50 000 g/mol and subsequently carrying out a free-radical polymerization.

2. The process according to claim 1, wherein an SiO₂-based protective colloid and a methylhydroxypropylcellulose are selected.

3. The process according to claim 1, wherein an SiO₂-based protective colloid and a methylhydroxy-(C₁-C₄)-alkylcellulose having an average degree of substitution, DS, of 1.1 to 2.5 and a degree of molar substitution, MS of 0.03 to 0.9 are selected.

4. The process according to any of claims 1 to 3, wherein highly disperse silicas having average particle sizes in the range from 40 to 150 nm are selected.

5. The process according to any of claims 1, 3 and 4, wherein the methylhydroxy-(C₁-C₄)-alkylcellulose is used in an amount of 0.5% to 1.5% by weight, based on the SiO₂-based protective colloid.

6. The process according to any of claims 1 to 5, wherein the oil-in-water emulsion is free-radically polymerized by heating.

7. The process according to any of claims 1 to 6, wherein the oil-in-water emulsion is adjusted to a pH in the range from 2 to 7.

8. The process according to claim 1, whewrein the microcapsule dispersion obtained by free-radical polymerization is spray-dried.

9. The process according to claim 8, wherein a methylhydroxy-(C₁-C₄)-alkylcellulose is selected as spraying assistant.

10. The process according to claim 8 or 9, wherein a methylhydroxy-(C₁-C₄)-alkylcellulose having an average molecular weight ≤ 50 000 g/mol is selected as spraying assistant.

## Revendications

1. Procédé de fabrication de microcapsules, qui comprennent un noyau de capsule lipophile et une paroi de capsule, qui est constituée par 30 à 100 % en poids par rapport au poids total des monomères, d'un ou de plusieurs monomères (monomères I) du groupe comprenant les esters alkyliques en C₁-C₂₄ de l'acide acrylique et/ou méthacrylique, l'acide acrylique, l'acide méthacrylique et l'acide maléique, 0 à 70 % en poids par rapport au poids total des monomères, d'un ou de plusieurs monomères bi- ou polyfonctionnels (monomères II), qui ne sont pas solubles ou difficilement solubles dans l'eau, et 0 à 40 % en poids par rapport au poids total des monomères, d'un ou de plusieurs autres monomères (monomères III),
selon lequel une émulsion huile dans eau contenant des monomères et une substance lipophile, un colloïde protecteur à base de SiO₂ et une méthylhydroxy-alkylcellulose en (C₁-C₄) d'un poids moléculaire moyen ≤ 50 000 g/mol est fabriquée, puis une polymérisation radicalaire est réalisée.

2. Procédé selon la revendication 1, **caractérisé en ce qu'**un colloïde protecteur à base de SiO₂ et une méthylhydroxypropylcellulose sont choisis.

3. Procédé selon la revendication 1, **caractérisé en ce qu'**un colloïde protecteur à base de SiO₂ et une méthylhydroxy-alkylcellulose en (C₁-C₄) ayant un degré de substitution moyen DS de 1,1 à 2,5 et un degré de substitution molaire MS de 0,03 à 0,9 sont choisis.

4. Procédé selon l'une quelconque des revendications 1 à 3, **caractérisé en ce que** des silices hautement dispersées ayant des tailles de particule moyennes dans la plage allant de 40 à 150 nm sont choisies.

5. Procédé selon l'une quelconque des revendications 1, 3 ou 4, **caractérisé en ce que** la méthylhydroxy-alkylcellulose en (C₁-C₄) est utilisée en une quantité de 0,5 % en poids à 1,5 % en poids, par rapport au colloïde protecteur à base de SiO₂.

6. Procédé selon l'une quelconque des revendications 1 à 5, **caractérisé en ce que** l'émulsion huile dans eau est polymérisée par voie radicalaire par chauffage.

7. Procédé selon l'une quelconque des revendications 1 à 6, **caractérisé en ce que** l'émulsion huile dans eau est ajustée à u pH dans la plage allant de 2 à 7.

8. Procédé selon la revendication 1, **caractérisé en ce que** la dispersion de microcapsules obtenue par polymérisation radicalaire est séchée par pulvérisation.

9. Procédé selon la revendication 8, **caractérisée en ce qu'**une méthylhydroxy-alkylcellulose en (C₁-C₄) est choisie en tant qu'adjuvant de pulvérisation.

10. Procédé selon la revendication 8 ou 9, **caractérisé en ce qu'**une méthylhydroxy-alkylcellulose en (C₁-C₄) ayant un poids moléculaire moyen ≤ 50 000 g/mol est choisie en tant qu'adjuvant de pulvérisation.
